# EUROPEAN PATENT APPLICATION

(11) **EP 1 739 941 A1**
(43) Date of publication of application: **03.01.2007**
(21) Application number: 05300547.6
(22) Date of filing: 01.07.2005
(51) Int. Cl.: H04M 3/46, H04M 7/00, H04L 12/46, H04Q 3/00

(54) **A method and apparatus for routing signalling messages between an IP and an SS7 network**

(71) Applicant: Hewlett-Packard Development Company, L.P., Houston, Texas 77070 (US)
(72) Inventor: Bouckaert, Philippe, 38053, Grenoble Cedex 09 (FR); Eynaud, Jean-Louis Hewlett-Packard France, 06901 Sophia-Antipolis (FR); Geraci, Thierry Hewlett-Packard France, 06901 Sophia-Antipolis (FR)
(74) Representative: Lloyd, Richard Graham

(57) **Abstract**

The network comprises a circuit switched telephone network that is interconnected with an IP network and that uses SIGTRAN for providing connections. To interconnect the networks a signaling gateway is used thus providing SS7 to SCCP User adaptation on the IP side and vice versa.
A method for routing signaling messages between nodes in a network in which virtual addresses are used to route messages in a predetermined order to a set of network nodes. A database is used to map the virtual address to a set of real addresses thus implementing hunt group functionality in a mixed IP/PSTN network.

## Description

### Field of Invention

This invention relates to a method or apparatus for routing signaling messages in a network.

### Background of the Invention

Communications networks may comprise a number of interconnected networks, each using different network technologies and protocols. For example, an Internet Protocol (IP) network may be connected to a switched circuit telephone network (PSTN). The Internet Engineering Task Force (IETF) have proposed a system, called Signaling Transfer (SIGTRAN), for providing connections between IP and PSTN networks. The system includes a signaling gateway (SG), which provides a connection point between the SS7 and IP networks and can convert signaling messages from one network to the other. For example, a SG can be arranged to convert messages between the Signaling System 7 (SS7) protocol commonly used by PSTN networks to the SCCP (Signaling Connection Control Part) User Adaptation (SUA) protocol used on IP networks. This enables PSTN signaling end points (SEPs) to communicate with IP based application servers (AS). SEPs and ASs contain programmable call processing logic and databases which enable the control of call processing. SEPs and ASs can deliver services such as number translation to routable destination numbers, local number portability, and Caller ID display.

New services such as anti-spamming, and preferred roaming are being introduced to telephone networks which operate over SS7 networks. Some new services add further functionality to existing services, while others stand alone as new services. One way to add these new services is to create new SS7 applications on existing SCPs or to modify existing applications. However, the creation or modification of SS7 applications is complex and costly. Another way to provide these new services is to add a new SCP to the network which may work alone or in conjunction with an existing SCP. However, the addition of new nodes requires the modification of the SS7 network topology and often requires the introduction of new network addresses called Point Codes (PCs) in SS7 networks. New nodes also require the addition of new links and link sets on existing network routing nodes known as signaling transfer points (STPs). These disturbances to the network topology lead to increased operational and equipment costs.

### Summary of the Invention

An embodiment provides a method for routing signaling messages between nodes in a network, the method comprising the steps of:
a) accessing a set of at least two destinations node addresses, the set having a unique identifier;
b) receiving a message from a network, the message comprising data determining the destination node of the message; and
c) if the destination node corresponds to the unique identifier then routing the message to each of the destination node addresses in the set, in a predetermined order.

In step b) the message may comprises data defining the originating node of the message and if in step c) the originating node address is a member of the set then the message may be routed to the next destination node to the originating node in the predetermined order. If in step c) the destination node address corresponds to a real network node then the message may be routed to the real node.

The unique identifier may be a virtual address. The set may define a logical group of nodes. The set of destination nodes may comprise nodes from different networks. The networks may include PSTN and IP networks. The method may be carried out on a signaling transfer point (STP) of an SS7 network. The method may be carried out on a signaling gateway (SG).

Another embodiment provides apparatus for routing signaling messages between nodes in a network, the apparatus being operable to:
access a set of at least two destinations node addresses, the set having a unique identifier;
receive a message from a network, the message comprising data determining the destination node of the message; and
if the destination node corresponds to the unique identifier then to route the message to each of the destination node addresses in the set, in a predetermined order.

An embodiment provides a signaling message router for a network comprising:
means for accessing a set of at least two destinations node addresses, the set having a unique identifier;
means for receiving a message from a network, the message comprising data determining the destination node of the message; and
means operable if the destination node corresponds to the unique identifier to route the message to each of the destination node addresses in the set, in a predetermined order.

Another embodiment provides a signaling transfer point (STP) operable to:
access routing data for routing messages to destinations including virtual destinations comprising an ordered set of addresses;
receive messages from originating nodes; and
route the message in accordance with the ordered set of addresses if the destination address of a message is a virtual destination.

An embodiment provides a software program or group of software programs arranged to enable a programmable device or a group of programmable devices to carry out a method for routing signaling messages between nodes in a network, the method comprising the steps of:
a) accessing a set of at least two destinations node addresses, the set having a unique identifier;
b) receiving a message from a network, the message comprising data determining the destination node of the message; and
c) if the destination node corresponds to the unique identifier then routing the message to each of the destination node addresses in the set, in a predetermined order.

Another embodiment provides a software program or group of software programs arranged to enable a programmable device or a group of programmable devices to provide apparatus for routing signaling messages between nodes in a network, the apparatus being operable to:
access a set of at least two destinations node addresses, the set having a unique identifier;
receive a message from a network, the message comprising data determining the destination node of the message; and
if the destination node corresponds to the unique identifier then to route the message to each of the destination node addresses in the set, in a predetermined order.

An embodiment provides a software program or group of software programs arranged to enable a programmable device or a group of programmable devices to provide a signaling message router for a network comprising:
means for accessing a set of at least two destinations node addresses, the set having a unique identifier;
means for receiving a message from a network, the message comprising data determining the destination node of the message; and
means operable if the destination node corresponds to the unique identifier to route the message to each of the destination node addresses in the set, in a predetermined order.

Another embodiment provides a software program or group of software programs arranged to enable a programmable device or a group of programmable devices to provide a signaling transfer point (STP) operable to:
access routing data for routing messages to destinations including virtual destinations comprising an ordered set of addresses;
receive messages from originating nodes; and
route the message in accordance with the ordered set of addresses if the destination address of a message is a virtual destination.

### Brief Description of the Drawings

Embodiments of the invention will now be described, by way of example only, with reference to the accompanying drawings in which:
Figure 1 is a schematic illustration of a communications network;
Figure 2 is a schematic illustration of an address structure used in the network of Figure 1;
Figure 3 is a schematic illustration of a network access view for elements of the network of figure 1;
Figure 4 is a flow diagram illustrating a method of routing messages in the network of figure 1; and
Figures 5a and 5b are schematic illustrations showing the addition of new functionality to a communications network.

### Detailed Description of Preferred Embodiments of the Invention

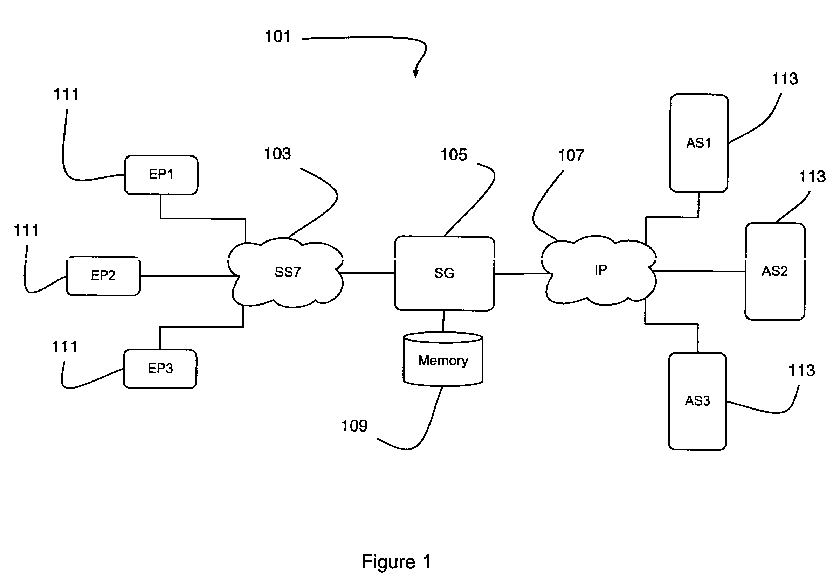

With reference to figure 1, a communications network 101 comprises a PSTN network 103 connected via a signaling gateway (SG) 105 to an IP network 107. The PSTN network uses the SS7 protocol and the IP network uses the SUA protocol. The signaling gateway is connected to a memory 109 and is operable to enable signaling communications between signaling end points (EP1, EP2, EP3) 111 connected to the PSTN network 103 and application servers (AS1, AS2, AS3) 113 connected to the IP network 107.

The signaling gateway 105 is arranged to convert messages travelling between the networks 103, 107 from one network's protocol to the other's. This function is carried out by a nodal inter-working function (NIF) arranged to convert SS7 protocol messages to the SUA protocol messages and vice versa using a routing key interpreter. Each application server 113 has a unique routing key associated with it. The routing keys used by the SG are stored in the memory 109. The routing keys each comprise parameters and values which can be matched by the routing key interpreter against incoming messages. The routing keys also include a destination part which identifies the destination to which the message is to be sent. When the routing key interpreter finds a match for an incoming message it returns the corresponding destination address. The routing keys may be configured statically at the application servers 113 and the signaling gateway, or may be configured statically at each AS and then registered at the signaling gateway 105 by means of routing key management messages.

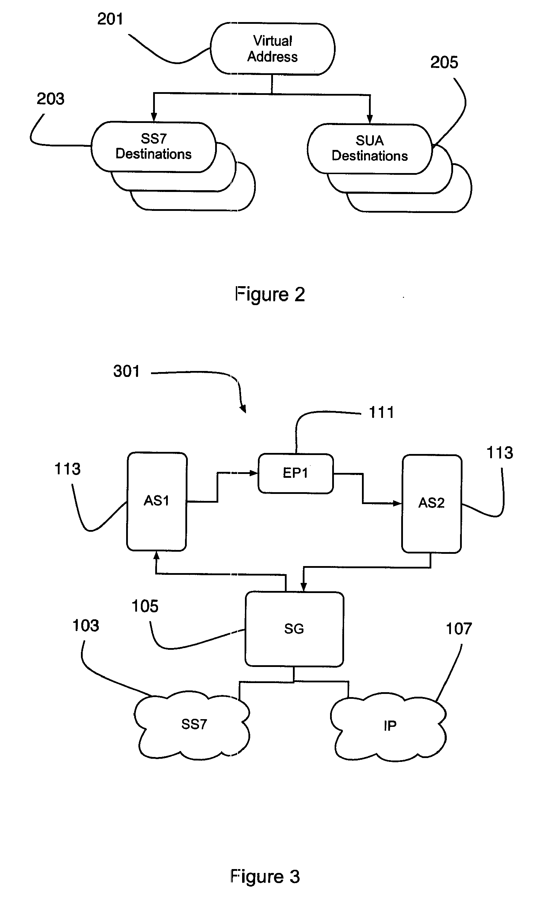

Destination addresses are of two types. The first type are real addresses which correspond to a particular EP 111 or AS 113 in the network 101. The second type of addresses, shown in figure 2, are virtual addresses 201 which correspond to a set of addresses which may be any number and combination of real SS7 addresses 203 and real SUA addresses 205. For example, a virtual address may correspond to a set of real addresses for just ASs or for just EPs. Alternatively, a virtual address may correspond to a set of real addresses for a mixture of ASs and EPs. In other words, the virtual address can correspond to a set of any other addresses, some of which may be virtual addresses.

The signaling gateway 105 further comprises configuration data, held in the memory 109, which comprises mappings between each virtual destination 201 identified in the routing keys and the corresponding set of real addresses 203, 205. Virtual addresses are represented by unique identifiers in the routing keys. Table 1 below illustrates the configuration data for two virtual addresses with the unique identifiers "Vdest1" and "Vdest2". Each virtual destination corresponds to a set of three real addresses spread across both networks 103, 107. The SS7 end point and SUA application server addresses shown in table 1 are simplified to alphanumeric identifiers to aid understanding. A unique order number is assigned to each element of the set of real addressees that are represented by a virtual address.

**Table 1**

| Virtual Destination Identifier | Set of Real Addresses | Order |
|---|---|---|
| Vdest1 | AS1 | 1 |
| | AS2 | 3 |
| | EP1 | 2 |
| Vdest2 | AS3 | 2 |
| | EP3 | 1 |
| | EP2 | 3 |

When the routing key interpreter returns a virtual address, the signaling gateway is arranged to route the message to the corresponding set of addresses in the order defined by the order number for each such address. For example, the SG will route messages for the virtual destination Vdest1 to the application server with the address AS1, followed by the application server with address AS2 and finally to the signaling end point with address EP1.

The combination of the virtual address and the order creates a logical group or set of end points and application servers which runs across network boundaries. From an SS7 viewpoint, the SG can be seen as acting as a signaling transfer point (STP) on the edge of the SS7 network, in other words, as an edged-STP. The combination of the SG and virtual addressing with ordering provides access via to the logically linked endpoints and application servers as if they were a single entity. Access to this single entity can be gained from either network 103, 107 and any other network which may be connected to the SG. Figure 3 illustrates a network access view of the virtual address Vdest1 in which the SG 105 provides access from the networks 103, 107 to the set of ASs (AS1, AS2) 113 and EPs (EP1) 111. The ordering of message routing is indicated in figure 3 by arrows running between the elements of the set.

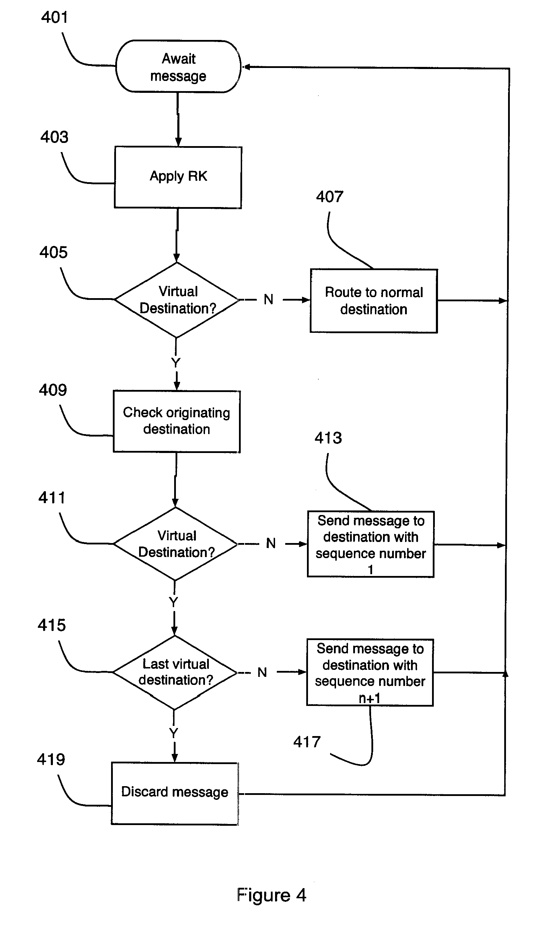

The processing by the SG of messages including virtual addresses will now be described with reference to the flow chart of figure 4. At step 401, the SG is in a wait state, awaiting the receipt of a message. When a message is received, processing moves to step 403 where the message is passed to the routing key interpreter. The routing key interpreter matches the message against a routing key and returns either a real destination address or the unique identifier of a virtual address for the message. If at step 405 the returned address is a real address then processing moves to step 407 where the SG routes the message in the normal way to the destination address. Processing then returns to the wait state at step 401.

If at step 405 the returned address is a virtual address then processing moves to step 409 where the originating address of the message is established and processing moves to step 411. If at step 411 the originating address is not a member of the set of addresses corresponding to the virtual destination address for the current message then processing moves to step 413. At step 413, the message is routed to the first real address in the set for the virtual address, that is, the real address with order number one. Processing then returns to the wait state at step 401.

If at step 411 the originating address of the message is from the set corresponding to the virtual destination then processing moves to step 417. At step 417, the originating address for the message is checked against the set of addresses and if it is not from the last address in the order sequence then processing moves to step 417. At step 417, the message is routed to the real address from the set having the next order number in the sequence from the originating address of the message. In other words the real address from the set with an order number of n+1, where n is the order number of the originating address. Processing then returns to the wait state at step 401. If at step 417, the message is from the last message in the set of real addresses for the virtual destination then processing moves to step 419 where the message is discarded and processing returns to step 401 to await receipt of a further message.

In this manner, the signaling gateway routes messages addressed to a virtual destination to each of the address in a corresponding set of address in a predetermined order. In other words, the ordering of the real addresses in the set provides a directional, logical link between nodes which may be on different networks and which can be treated as a single logical entity or group. This facility enables new functionality to be added to the network with minimal disturbance of the existing network topology.

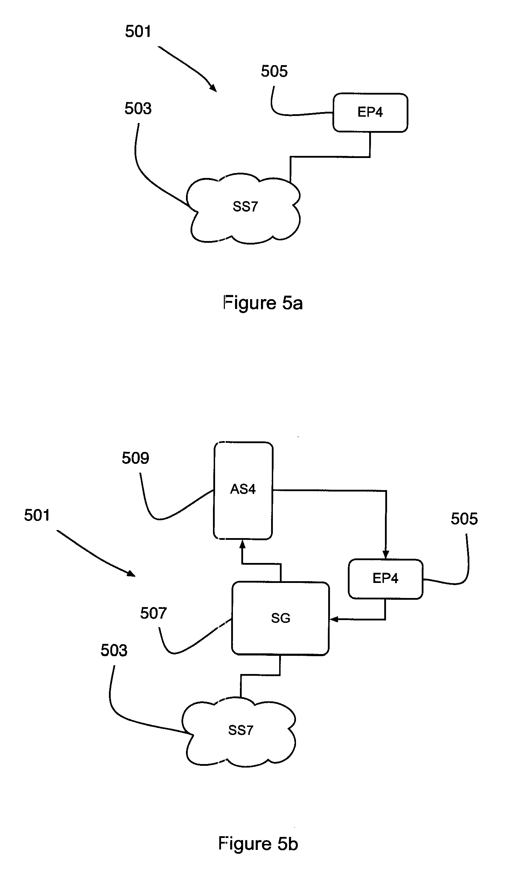

Figure 5a shows a PSTN network 503 using the SS7 protocol which has an end point (EP4) 505 in the form of a home location register (HLR). The HLR is a database where subscription information for each mobile user of the network is stored. The HLR is the key repository of information and is consulted whenever the subscriber requests access to the network. Once a mobile user is registered with a network, their current location on the network is stored in the HLR, thus allowing incoming calls to be routed to the subscriber. The HLR has an address or point code (PC) in the SS7 network 503 of PC=1.

In this example, the network administrator wishes to add preferred roaming (PR) capabilities to the network 503 as an addition to the functionality of the HLR facility. PR facilities ensure that a user, attempting to connect to a home network from abroad via a foreign network, makes use of the foreign network which is preferred by the home network provider. In order to add such functionality to the HLR facility, the modifications shown in figure 5b are carried out. An SG 507 is added to the network and given the next available SS7 address of PC=2. An application server (AS4) 509 is connected to the SG using SUA (SIGTRAN) connectivity. The routing keys in the SG include one routing key to route normal HLR messages to the real address (PC=1) of the HLR facility on the EP 505 and another routing key to capture preferred roaming (PR) messages, in the form of UPDATE_LOCATION messages, and route those messages to a virtual destination address Vdest3. The virtual destination data for Vdest3 is set out in table 2 below.

**Table 2**

| Virtual Destination Identifier | Set of Real Addresses | Order |
|---|---|---|
| Vdest3 | AS4 | 1 |
| | EP4 | 2 |

The effect of the modification made in figure 5a and the virtual destination address of table 2 is that messages bound for the HLR facility are routed as normal to the HLR facility on the end point 505. Meanwhile, the PR messages (UPDATE_LOCATION) are filtered out and diverted to the PR facility on the application server 509 before being passed to the HLR facility. This means that before a connection is allowed to a foreign network, the PR facility can determine if that network is an acceptable one and of not to take appropriate action. The AS 509 acts as a proxy server to the EP 505 by intercepting particular messages with the help of the SG and pre-processing them before they are finally routed to the HLR by the SG.

Although the method described above particularly refers to the SUA protocol, it will be apparent that the invention may be used with the M3UA protocol, which uses a similar routing key procedure, or indeed any other protocol allowing interfacing of messages between two networks as desired.

In some embodiments, the set of real addresses includes one or more virtual addresses. In other embodiments, the order number for the set of destination addresses corresponding to a virtual address is omitted and instead the order of the destination addresses is implied, for example, from the order in which the destination addresses are stored. In another embodiment, the order of addresses in the set includes routing messages to some of the set of destinations addresses simultaneously.

It will be understood by those skilled in the art that the apparatus that embodies a part or all of the present invention may be a general purpose device having software arranged to provide a part or all of an embodiment of the invention. The device could be single device or a group of devices and the software could be a single program or a set of programs. Furthermore, any or all of the software used to implement the invention can be communicated via any suitable transmission or storage means so that the software can be loaded onto one or more devices.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

In the present specification "comprise" means "includes or consists of' and "comprising" means "including or consisting of'.

## Claims

1. A method for routing signaling messages between nodes in a network, the method comprising the steps of:
a) accessing a set of at least two destinations node addresses, said set having a unique identifier;
b) receiving a message from a network, said message comprising data determining the destination node of said message; and
c) if said destination node corresponds to said unique identifier then routing said message to each of said destination node addresses in said set, in a predetermined order.

2. A method according to claim 1 in which in step b) said message comprises data defining the originating node address of said message and if in step c) said originating node address is a member of said set then routing said message to the next destination node to said originating node in said predetermined order.

3. A method according to any preceding claim in which if in step c) said destination node corresponds to a real network node then routing said message to said real node.

4. A method according to any preceding claim in which said unique identifier is a virtual address.

5. A method according to any preceding claim in which said set defines a logical group of nodes.

6. A method according to any preceding claim in which said set of destination nodes comprises nodes from different networks.

7. A method according to claim 6 in which said networks include PSTN and IP networks.

8. A method according to any preceding claim carried out on a signaling transfer point (STP) of an SS7 network.

9. A method according to any preceding claim carried out on a signaling gateway (SG).

10. Apparatus for routing signaling messages between nodes in a network, the apparatus being operable to:
access a set of at least two destinations node addresses, said set having a unique identifier;
receive a message from a network, said message comprising data determining the destination node of said message; and
if said destination node address corresponds to said unique identifier then to route said message to each of said destination node addresses in said set, in a predetermined order.

11. Apparatus according to claim 10 in which said message comprises data defining the originating node of said message and said apparatus being further operable if said originating node address is a member of said set to route said message to the next destination node to said originating node in said predetermined order.

12. Apparatus according to any of claims 10 to 11 further operable if said destination node address corresponds to a real network node to route said message to said real node.

13. Apparatus according to any of claims 10 to 12 in which said unique identifier is a virtual address.

14. Apparatus according to any of claims 10 to 13 in which said set defines a logical group of nodes.

15. Apparatus according to any of claims 10 to 14 in which said set of destination nodes comprises nodes from different networks.

16. Apparatus according to claim 15 in which said networks include PSTN and IP networks.

17. A signaling message router for a network comprising:
means for storing a set of at least two destinations node addresses, said set having a unique identifier;
means for receiving a message from a network, said message comprising data determining the destination node of said message; and
means operable if said destination node corresponds to said unique identifier to route said message to each of said destination node addresses in said set, in a predetermined order.

18. A signaling transfer point (STP) operable to:
access routing data for routing messages to destinations including virtual destinations comprising an ordered set of addresses;
receive messages from originating nodes; and
route said message in accordance with said ordered set of addresses if the destination address of a message is a virtual destination.

19. A signaling gateway (SG) operable to provide the STP of claim 18.

20. A software program or group of software programs arranged to enable a programmable device or a group of programmable devices to carry out the method of any of claims 1 to 9, to provide the apparatus of any of claims 10 to 16, to provide the signaling message router of claim 17, the STP of claim 18 or the SG of claim 19.
